# EUROPEAN PATENT APPLICATION

(11) **EP 1 519 290 A1**
(43) Date of publication of application: **30.03.2005**
(21) Application number: 04104437.1
(22) Date of filing: 14.09.2004
(51) Int. Cl.: G06F 17/60

(54) **Integrated Order Management System for Telecommunication Services**

(30) Priority: 25.09.2003 US 672041
(71) Applicant: AT&T Corp., New York, NY 10013-2412 (US)
(72) Inventor: Aboujaoude, Roger B., Ocean Township, NJ New Jersey 07712 (US); Borno, Abraham, Piscataway, NJ New Jersey 08855 (US); Eslambolchi, Hossein, Los Altos Hills, CA California 94022 (US); Mnich, Richard J., Holmdel, NJ New Jersey 07733 (US)
(74) Representative: Asquith, Julian Peter

(57) **Abstract**

An integrated order manager (IOM) is used to provide a single ordering platform for telecommunication service customers. The customer is provided direct access to the platform and is able to retrieve his current customer profile associated with the telecommunication service provider. The customer is presented with a series of web pages that allows the customer to add/delete/modify various service offerings, without the need to interface with the different departments within the company (e.g., data vs. voice, local vs. long distance).

## Description

### Technical Field

The present invention relates to a system for ordering telecommunication services and, more particularly, to an automated and integrated order management system for providing a single interface between a customer and a telecommunication services provider.

### Background of the Invention

As a result of the dramatic proliferation of both telecommunication service providers and the various telecommunication products/services that have been developed, the task of ordering and/or modifying a particular telecommunication product/service has become a daunting task for the consumer. The task is particularly overwhelming in the business setting, where a telecommunications control organization often has to juggle various product/service requests from different employees, keep track of product shipment dates, service completion dates, etc. In this particular environment, one person may deal with several different service ordering agents within the telecommunications company to place an order, track the order and thereafter modify the order. Multiplied by tens (or hundreds) of such orders, the process of controlling telecommunications service orders is generally considered as problematic.

### Summary of the Invention

The problems as outlined above are addressed by the present invention, which relates to a system for ordering telecommunication products and services and, more particularly, to an automated and integrated order management system for providing a single interface between a customer and a telecommunication services provider.

The methodology of the present invention functions to consolidate into a single platform the ordering capabilities of multiple service representatives, where each service representative may itself be responsible for interfacing with orders for multiple products and/or services. In particular, the customer is permitted to order their own product(s) and service(s) from a single integrated platform that allows the customer to quickly and easily see all of the various service alternatives from which they may choose.

In a preferred embodiment of the present invention, an on-line service offering process is used, with a web page being presented to a customer for expediting the ordering process. In one specific business-to-business embodiment, a customer can electronically link to the integrated order manager of the present invention via XML or similar technology that enables customers to link their own systems to the telecommunication services provider's ordering and service delivery systems. This provides customers with the capability to feed orders directly into the same channels used by, for example, company internal customer care centers.

In the event that the customer has previously ordered service(s) from the provider, a customer number or other identifier can be used to present a graphical user interface defining the current status of each subscribed-to service. The customer may then modify the existing array of subscribed-to services, where pull-down menus and pop-up windows are used to significantly reduce the possibility of incorrect data entry on the part of the subscribing customer.

In the event that a single individual is responsible for telecommunication services identified with different departments of the same company, a sub-account registry can be used to present to the ordering individual only the information pertinent to that department.

One features of the present invention is that integrated ordering can then be extended to provide direct contact with the various telecommunication service provisioning systems within the company. For some systems, this direct linkage then enables automated network provisioning for the customer as well as, for some cases, online provisioning.

Other and further features of the present invention will become apparent during the course of the present invention and by reference to the accompanying drawings.

### Brief Description of the Drawings:

Referring now to the drawings,
FIG. 1 illustrates an exemplary prior art order process for various telecommunication services, showing the interworking of orders from various sources, include sales representatives and customers;
FIG. 2 contains a high-level diagram of the integrated order manager (IOM) of the present invention, and its use as an interface between ordering sources (customers, account executives and negotiator contacts) and offered services;
FIG. 3 is a diagram of the IOM as shown in FIG. 2, showing the use of end-to-end flow through the management system in accordance with the present invention; and
FIGS. 4 - 8 contain a set of screen shots used for ordering frame relay service in accordance with the present invention.

### Detailed Description

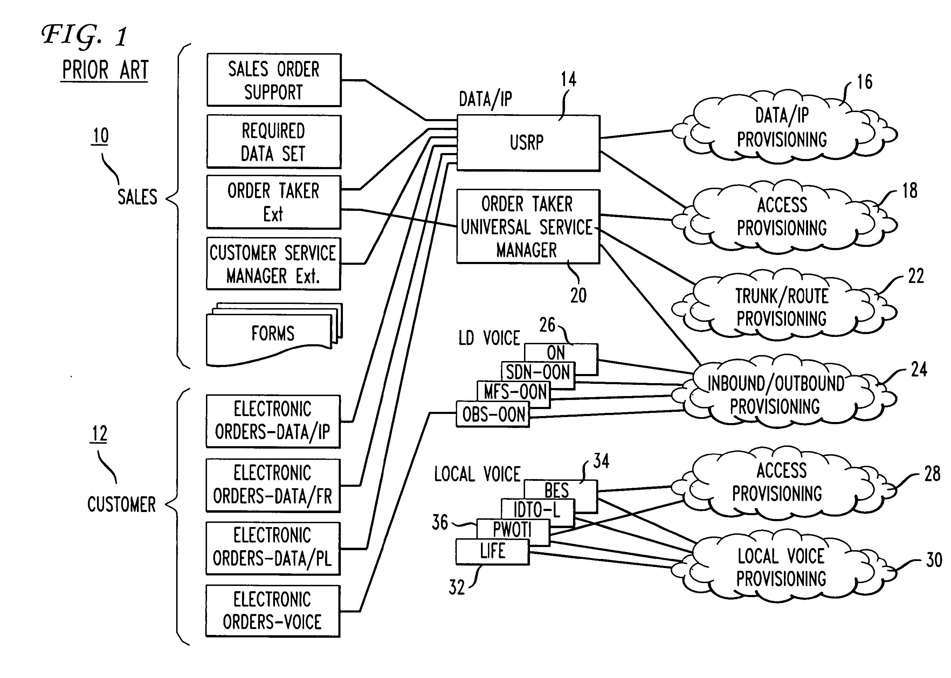

FIG. 1 illustrates an exemplary conventional ordering arrangement which is currently used by various companies and individuals to process orders with a telecommunication services company. In this particular example, the ordering process is shown as divided between orders placed by internal sales executives 10 and orders placed directly by customers 12. As shown, the sales executives perform as an interface between the telecommunications company and customers, placing orders for data/IF services via a Universal Service Request Platform (USRP) 14. USRP 14, in turn, allows for sales executives 10 to provide data/IP service provisioning 16 and/or access provisioning 18, as shown in FIG. 1. Using a separate ordering process, an external order-taker 20 may be utilized by a sales executive 10 to interact with access provisioning 18, as well as trunk/route provisioning 22 and inbound/outbound provisioning 24.

Separate and distinct from using an internal sales executive, a customer 12 may currently interface with various types of "order negotiators" (ONs) programs to modify their various telecommunication services. In the arrangement as shown in FIG. 1, a first set of ONs 26 may be used to perform electronic ordering of long distance voice service via inbound/outbound provisioning 24. With respect to local service, both local access provisioning 28 and local voice provisioning 30 may be provided through a separate set of interfaces, such as a local service order platform 32, back end system platform 34, PRIME-WEB order tool 36, and the like.

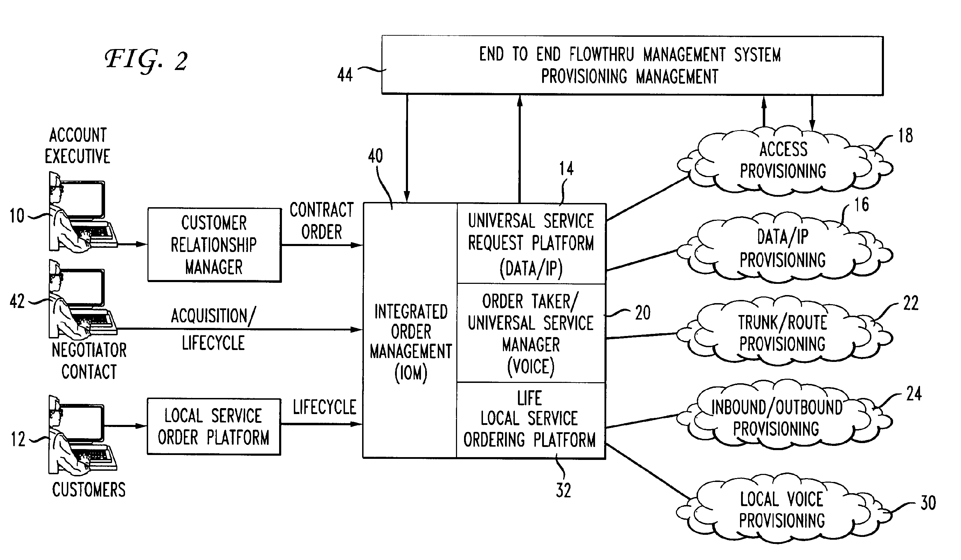

Clearly, the use of all these various interfaces between the sales executive/customer and the desired service offerings results in significant customer confusion, delay in service provisioning and increased cost to the customer. Therefore, in accordance with the present invention, an integrated order manager (IOM) has been developed that serves as a single point-of-contact interface directly between the customer and the various service offerings. FIG. 2 illustrates, in a high level diagram, the application of an IOM platform 40 of the present invention as the interface between sales executives 10, customers 12 and the services to be provisioned, namely access provisioning 18, data/IP provisioning 16, trunk/route provisioning 22, inbound/outbound provisioning 24 and local voice provisioning 30. As shown, IOM 40 is positioned to receive input service requests from any one of the various sources, such as customers 12, account executives 12, or any other type of service contract negotiator 42. IOM 40 then interacts with data/IF USRP 14 (for data/IP services), Order Taker/universal service manager 20 (for long distance voice) and local service order platform 32 (for local service), where each of these platforms interacts directly with each service, as shown in FIG. 2, and as was the case in the prior art. In further accordance with the present invention, an end-to-end flow through management system/provisioning manager 44 interacts with IOM 40 and platforms 14, 20 and 32, as well as each service, to monitor the progress of each order as it is placed.

Advantageously, the inclusion of IOM 40 in the ordering process allows for a customer to order services online, allowing the customer to change existing I/O services, view location level inventory for change/delete orders, disconnect service, order new services, add a new location, and/or establish billing groups, among other options. As a result of using IOM 40 to provide online ordering, the customer experiences faster order processing and provisioning, fewer ordering errors, immediate order confirmation, online reporting capabilities, and ordering ability 24 hours a day, seven days a week.

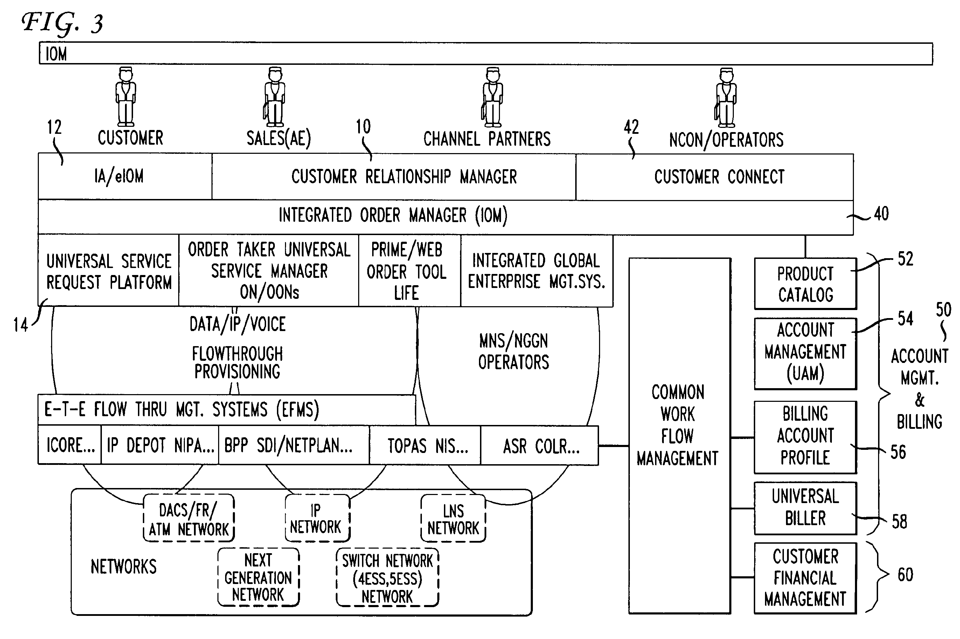

As shown in FIG. 3, IOM 40 is particularly useful in that IOM 40 includes linkages to downstream systems, such as systems 50, with extensive inventory and account edits to deliver highest levels of quality data to facilitate flowthrough from the input requests (sales executives or customers) to the provisioning operations. Systems 50 may include, as shown, a product catalog 52, account management 54, billing account profile 56, a universal biller 58 and a customer financial manager 60. Indeed, a significant aspect of the present invention is that IOM 40 may then be linked to the associated provisioning systems within the telecommunications company, enabling automated network provisioning and, for some service components, online provisioning.

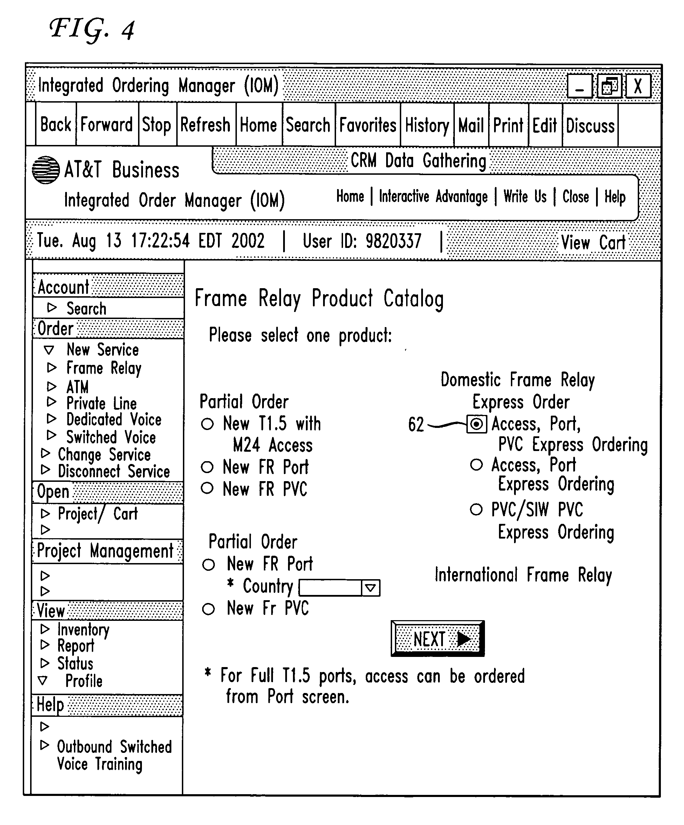

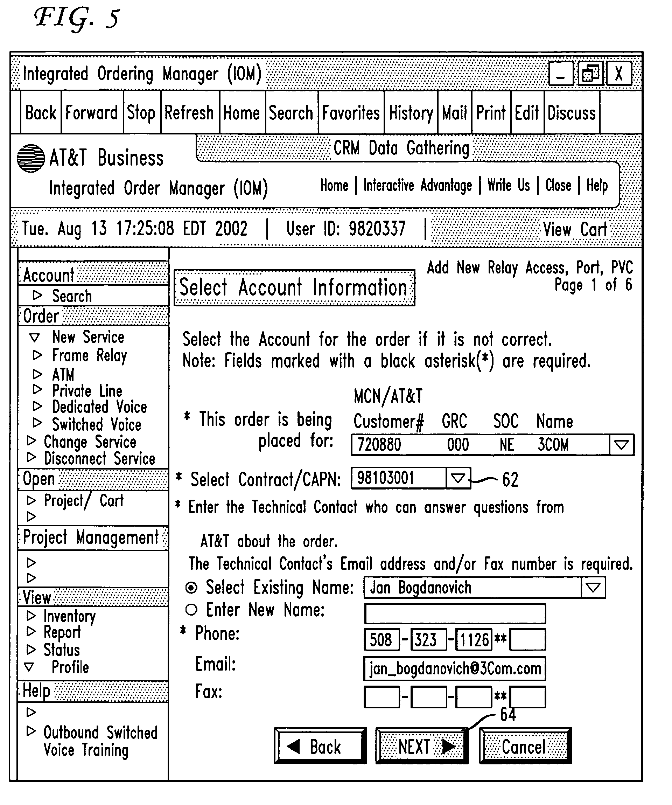

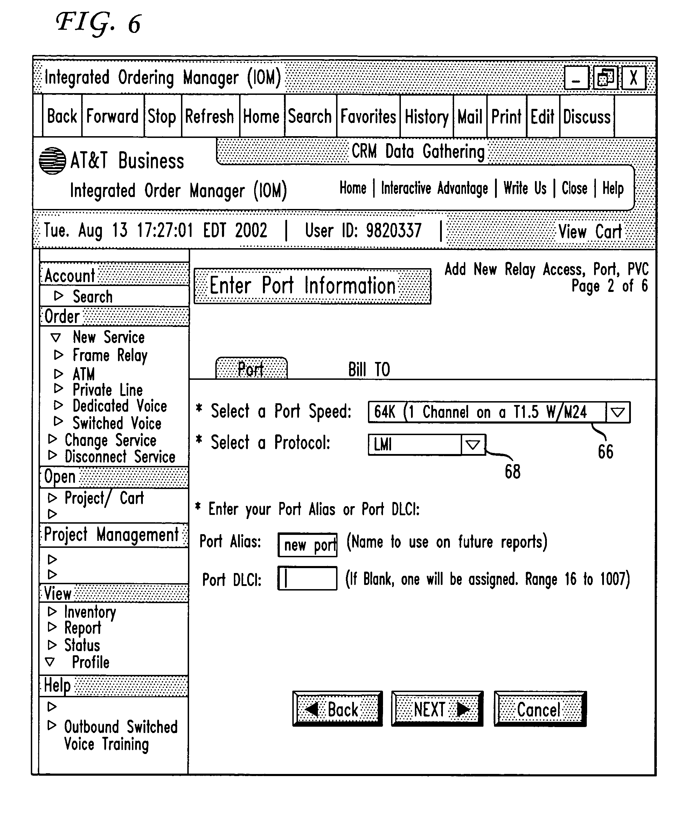

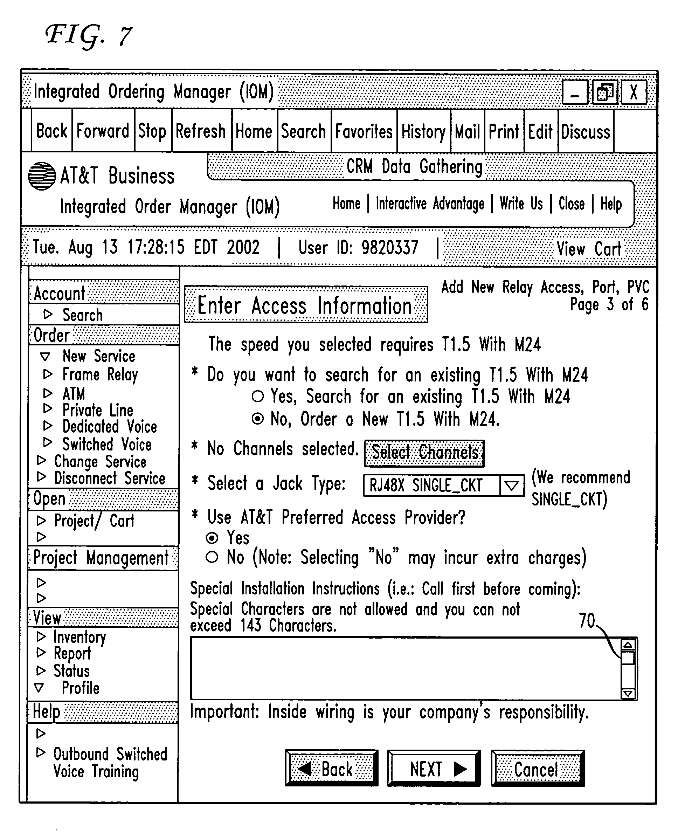

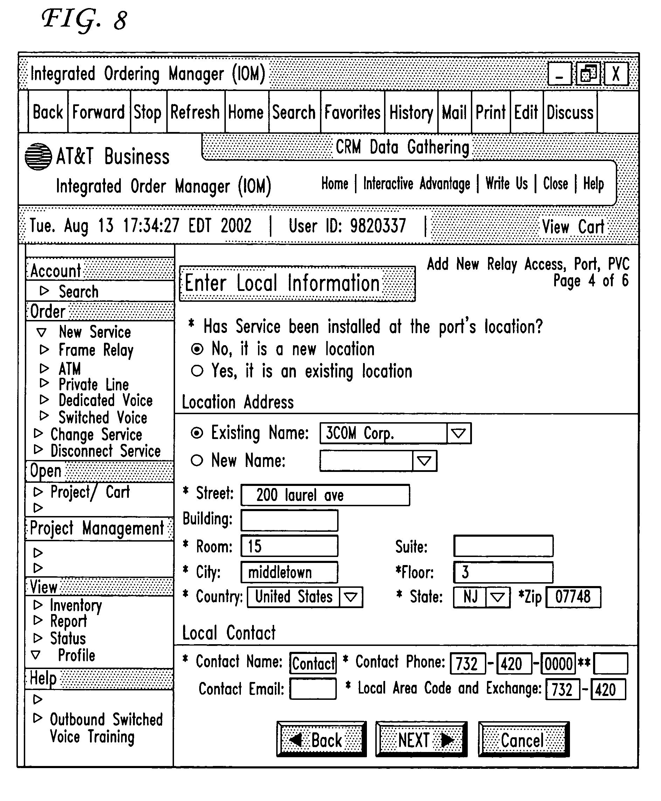

FIG. 4 illustrates an exemplary opening "screen shot" that will be presented to a customer/sales executive to activate the online ordering process of the present invention as implemented by IOM 40. In this particular example, the customer is interested in ordering frame relay service and is placing an "express order" for domestic frame relay service, as shown by highlighted icon 60 in FIG. 4. By virtue of using the online ordering process, errors in order placement are reduced, since the details of the ordering process are under customer control. Once icon 60 has been activated, the screen shown in FIG. 5 is displayed, requesting the customer to enter the appropriate account information. The use of a drop-down menu 62 for the contract number allows for fewer errors in coordinating the service being ordered with the proper contract. As shown, a particular contact person and/or email may be entered and then stored with the order information. With this information entered, the "next" button 64 is activated to bring up the screen as shown in FIG. 6, which in this case allows for port information to be entered, where this "port" will then be associated with the new frame relay service. The port speed is entered via a drop-down menu 66, and a protocol drop-down 68 (again, the use of drop-down menus reducing order input errors on the part of the customer). FIG. 7 illustrates the next screen presented to the customer, requesting access information. As shown, FIG. 7 includes a dialog box 70 in which the customer may enter special instructions for a service representative. The screen shot of FIG. 8 presents the "location information" that the customer needs to enter to complete the ordering process.

It is to be understood that the various screen shots as shown in FIGS. 4-8 are exemplary only, and various other arrangements may be used to provide an online ordering process utilizing an integrated ordering manager (IOM) in accordance with the present invention.

## Claims

1. An online service ordering process for implementing the provisioning of telecommunication services between a customer and a telecommunication service provider, the process comprising the steps of
receiving a request from a customer via a data network, at an integrated order manager platform, to access the telecommunications service ordering process
transmitting to the customer, via the data network, a web page requesting customer identification information;
receiving customer identification information at the integrated order manager;
retrieving and verifying customer identification information at the integrated order manager;
transmitting an initial service request web page to the verified customer, the web page including customer-specific information associated with the retrieved customer identification information; and
interacting, via additional web pages, with the verified customer to complete the requested service order.

2. The online service ordering process as defined in claim 1 wherein the customer is an internal telecommunications service provider sales representative.

3. The online service ordering process as defined in claim 1 wherein the customer is an external consumer customer.

4. The online service ordering process as defined in claim 1 wherein the customer is a contract negotiator.

5. The online service ordering process as defined in claim 1 wherein the web pages associated with performing the order process including drop-down menus of service options.

6. The online service ordering process as defined in claim 1 wherein at least one web page associated with performing the order process includes a dialog box for the customer to enter specialized information.

7. The online service ordering process as defined in claim 1 wherein the process is used in the provisioning of data/IP service.

8. The online service ordering process as defined in claim 1 wherein the process is used in the provisioning of access service.

9. The online service ordering process as defined in claim 1 wherein the process is used in the provisioning of voice services.

10. The online service ordering process as defined in claim 1 wherein the process is used in the provisioning of long distance service.

11. The online service ordering process as defined in claim 1 wherein the process is used in the provisioning of local service.
